# EUROPEAN PATENT SPECIFICATION

(11) **EP 1 963 228 B1**
(45) Date of publication and mention of the grant of the patent: **11.07.2012**
(21) Application number: 06830189.4
(22) Date of filing: 29.11.2006
(51) Int. Cl.: C01B 13/20, C01B 13/22, C01B 13/24, C01B 33/18, C01F 7/30, C01G 49/00, C01G 23/07, C01G 1/02, B22F 9/22, C01G 49/06

(54) **PROCESS FOR PREPARING PULVERULENT SOLIDS**
VERFAHREN ZUR HERSTELLUNG PULVERFÖRMIGER FESTSTOFFE
PROCEDE DE PREPARATION DE SOLIDES PULVERULENTS

(30) Priority: 23.12.2005 DE 102005061897
(43) Date of publication of application: 03.09.2008
(73) Proprietor: Evonik Degussa GmbH, 45128 Essen (DE)
(72) Inventor: SCHUMACHER, Kai, 65719 Hofheim (DE); FIEDLER, Stefan, 79540 Lörrach (DE); SCHILLING, Roland, 63579 Freigericht (DE); IHMIG, Ronald, 63543 Neuberg (DE); KATUSIC, Stipan, 65812 Bad Soden (DE)
(86) International application number: PCT/EP2006/069057
(87) International publication number: WO 2007/071530

(56) References cited:
- EP-A- 1 243 552
- WO-A-02/072471
- WO-A-2004/007357
- DE-A1- 2 153 310
- GB-A- 969 619
- US-A- 1 816 388
- US-A1- 2005 186 132
- ABE SAN ET AL: "MANUFACTURE OF METAL OXIDE POWDER" CHEMICAL ABSTRACTS + INDEXES, AMERICAN CHEMICAL SOCIETY. COLUMBUS, US, vol. 110, no. 14, 3 April 1989 (1989-04-03), page 171, XP000056112 ISSN: 0009-2258

## Description

The invention relates to a process for preparing pulverulent solids by reacting metal compounds with oxygen and/or steam in a high-temperature.

It is known that metal oxide powders can be prepared by means of pyrogenic processes. Commonly, metal compounds are evaporated and the vapours are converted to the oxides in a flame in the presence of oxygen and/or steam. These pyrogenic processes are known in the literature as flame oxidation or flame hydrolysis. The disadvantage of this process is the availability of metal compounds whose evaporation temperature is sufficiently high that they can be evaporated under economically viable conditions. They may, for example, be silicon tetrachloride, titanium tetrachloride or aluminium chloride. These compounds are associated with industrial scale substances, for example Aerosil®, pyrogenic silica powders from Degussa.

Even neglecting the economic aspect, it is difficult to find materials for evaporators which are stable at high evaporation temperatures, often under corrosive conditions. This leads to a limitation in the number of pyrogenically preparable oxides.

It was therefore an object of the invention to provide a process which overcomes the disadvantages of the known processes. In particular, the process should be performable in an economically viable manner.

The invention provides a process for preparing pulverulent solids, in which oxidizable and/or hydrolysable metal compounds are reacted in a high-temperature zone in the presence of oxygen and/or steam, the reaction mixture is cooled after the reaction, and the pulverulent solid is removed from gaseous substances, characterized in that at least one metal compound is introduced into the high-temperature zone in solid form, the evaporation temperature of the metal compound being below the temperature of the high-temperature zone and at least one further oxidizable and/or hydrolysable metal compound the metal compound being present in vaporous form is introduced into the high-temperature zone.

The temperature of the high-temperature zone may preferably be 400 to 3000°C.

The reason for the advantage of the process according to the invention is in particular that the temperature of the high-temperature zone is utilized in order to evaporate metal compounds with high evaporation temperature and to react them immediately. Even in the case of metal compounds which have a comparatively low evaporation temperature, it is possible to dispense with external evaporators with the process according to the invention.

In the context of the invention, hydrolysable is understood to mean that the metal compounds are converted in the presence of steam to solid metal oxides and a by-product which is gaseous under the reaction conditions. Examples thereof are:

TiCl₄ + 2H₂O → TiO₂ + 4HCl; Si(OEt)₄ + 2H₂O → SiO₂ + 4EtOH.

In the context of the invention, oxidizable is understood to mean that the metal compounds are converted in the presence of oxygen to solid metal oxides and a gaseous by-product. An example thereof is: ZrCl₄ + O₂ → ZrO₂ + 2Cl₂.

The size of the metal compounds added in solid form may be within a range of several centimetres down to nanoscale dimensions. The particle size depends both on apparatus parameters, for example the flame temperature, and on substance parameters, for example evaporation temperature of the metal compound. In general, the size of the metal compounds added in solid form is 0.1 to 5000 µm, preferably 1 to 1000 µm.

The metal compound can be introduced into the high-temperature zone in any manner known to those skilled in the art. For example, the metal compound can be introduced by means of a metering screw, or in the form of an aerosol.

The metal compound may be supplied to the high-temperature zone by means of a carrier gas which may be inert or reactive (for example air, oxygen, nitrogen).

The high-temperature zone is formed by a flame which arises from the reaction of an oxygenous gas with a hydrogenous combustion gas. A suitable oxygenous gas is in particular air and oxygen-enriched air. Suitable combustion gases are in particular hydrogen, methane, ethane, propane, butane, natural gas. The manner in which the flame temperature can be varied is known to those skilled in the art.

Also known to those skilled in the art are flame types which are suitable for performing the process according to the invention, for example laminar or turbulent flames, premixed flames or diffusion flames, low-pressure or high-pressure flames, flames which spread below, at or above the speed of sound, pulsating or continuous flames, reducing or oxidizing flames, secondary flames, closed or open flames, flames from one or more burners, or a mixed form of the aforementioned flame types.

The type of the solid metal compound is not limited. The process according to the invention is indeed notable for the problem-free introduction as a solid. The solid metal compound may preferably contain, as the metal component, Ag, Al, As, Au, B, Ba, Be, Bi, Ca, Cd, Ce, Co, Cr, Cs, Cu, Er, Eu, Fe, Ga, Gd, Ge, Hf, In, K, La, Li, Mg, Mn, Mo, Na, Nb, Nd, Ni, P, Pb, Pd, Pm, Pr, Pt, Rb, Ru, Sb, Sc, Si, Sm, Sn, Sr, Ta, Tb, Ti, Tl, Tm, V, W, Y, Yb, Zn, Zr or a mixture of the aforementioned elements. Particular preference is given to Ag, Al, K, Ti, Er, Fe, P, Ta, Yb, Zr.

In addition, the solid metal compound may preferably be a chloride, a nitrate, a sulphate, an alkoxide, a carbonate, a carboxylate, an acetylacetonate or a carbonyl.

In the process according to the invention, at least one metal compound is supplied in solid form to the high-temperature zone. Further metal compounds are supplied to the high-temperature zone in vaporous form.

For this purpose, suitable metal compounds are those which contain, as the metal component, Ag, Al, As, Au, B, Ba, Be, Bi, Ca, Cd, Ce, Co, Cr, Cs, Cu, Er, Eu, Fe, Ga, Gd, Ge, Hf, In, K, La, Li, Mg, Mn, Mo, Na, Nb, Nd, Ni, P, Pb, Pd, Pm, Pr, Pt, Rb, Ru, Sb, Sc, Si, Sm, Sn, Sr, Ta, Tb, Ti, Tl, Tm, V, W, Y, Yb, Zn, Zr or a mixture thereof. In particular, suitable metal compounds are chlorides, nitrates, sulphates, carbonates, carboxylates, alkoxides, acetylacetonates or carbonyls.

With very particular preference, the following compounds may be used: SiCl₄, CH₃SiCl₃, (CH₃)₂SiCl₂, (CH₃)₃SiCl, (CH₃)₄Si, HSiCl₃, (CH₃)₂HSiCl, CH₃C₂H₅SiCl₂, disilanes with the general formula RₙCl₃₋ₙSiSiRₘCl₃₋ₘ where R=CH₃ and n+m = 2, 3, 4, 5 and 6, Si(OCH₃)₄, Si(OC₂H₅)₃, AlCl₃, Al(OisoC₃H₇), Al(Oiso-sec-C₄H₉), TiCl₄, Ti (OiC₃H₇)₄.

In the process according to the invention, oxygen and/or steam may preferably be present in such amounts that the metal compounds are converted completely.

However, it is also possible to use oxygen and/or steam in substoichiometric amounts, so that the metal compound used is not converted completely. In these preferred embodiments, the amount of oxygen and/or steam is selected such that 95 to 99.9% of the metal compound used is converted.

The pulverulent solid obtainable by the process according to the invention may preferably have a uniform chemical composition. In addition, it may be present as a physical and/or chemical mixture of compounds. The pulverulent solid is generally present predominantly in the form of aggregated primary particles. The primary particles generally do not have any pores. However, it is also possible to prepare particles having a surface roughness which constitutes a transition to micropores. Pores can, though, form within the arms of an aggregate or between aggregates. The surfaces of the primary particles generally have hydroxyl groups. The BET surface area of the pulverulent solid is in the range of 30 to 400 m²/g.

The pulverulent solid will be a mixed metal oxide powder or a metal-metal oxide powder.

Mixed metal oxide powder is understood to mean a powder in which there is intimate mixing of different metal oxides at the level of the primary particles or of the aggregates. The primary particles have bonds of the M(I)-O-M(II), M(I)-O-M(n) type, where M(I) is the metal of a first metal compound, M(II) the metal of a second metal compound and M(n) the metal of an nth metal compound. Metal-metal oxide powders are understood to mean those powders in which one component is present in non-oxidized form. Examples thereof are platinum-zirconium dioxide or gold-titanium dioxide.

The content in the component or the components of a mixed oxide powder or metal-metal oxide powder which is supplied to the high-temperature zone of the process according to the invention in the form of solid metal compounds is not restricted. In the case of mixed oxide powders or metal-metal oxide powders in which the metal compound of the main component has a low evaporation temperature and the metal compound of the secondary component a high evaporation temperature, it may be economically viable to supply only the metal compound of the secondary component in solid form, but to evaporate the metal compound of the main component externally.

The mixed oxide powder generally has a purity of at least 99% by weight. The purity may preferably be more than 99.5% by weight and more preferably more than 99.7% by weight. Impurities may originate from the feedstocks or result from the process.

The pulverulent solid can be used as a filler, as a carrier material, as a catalytically active substance, as a ceramic base material.

### Examples

Comparative example 1 : 2.2 m³ (STP)/h of hydrogen and 6.5 m³ (STP)/h of primary air are transferred into the mixing chamber of a burner. The mixture is ignited and combusted in a flame entering a reaction chamber. 4.5 kg/h of aluminium trichloride are metered into the flame by means of a metering screw. Additionally introduced into the reaction chamber are 20 m³ (STP)/h of secondary air. In a filter or cyclone, the solid is then removed from the offgas stream and subsequently treated with steam at a temperature of approx. 700°C.

Comparative examples 2-4 are performed analogously to Example 1. Feedstocks and reaction conditions can be found in Table 1.

Example 5: 8 kg/h of vaporous silicon tetrachloride are transferred into the mixing chamber of a burner.At the same time, 4.5 m³ (STP)/h of hydrogen and 11.9 m³ (STP)/h of primary air are introduced into the mixing chamber. The mixture is ignited and combusted in a flame entering a reaction chamber. 21 g/h of potassium chloride are metered into the flame by means of a metering screw. Additionally introduced into the reaction chamber are 30 m³ (STP)/h of secondary air. In a filter or cyclone, the solid is then removed from the offgas stream and subsequently treated with steam at a temperature of approx. 500°C.

Examples 6-8 are performed analogously to Example 5.

Examples 9-10 are likewise performed like Example 5, except with silver nitrate in place of potassium chloride. Example 11 is likewise performed like Example 5, but with titanium tetrachloride in place of silicon tetrachloride and iron(II) chloride in place of potassium chloride.

The analytical values of the resulting pulverulent solids can be found in Table 2.

**Table 1: Feedstocks and reaction conditions**

| | **Metal compound** | | | | | **Reaction gases** | | | |
|---|---|---|---|---|---|---|---|---|---|
| | Solid 1 | | | Vaporous | | H₂ | Air | | Temperature of high-temperature zone |
| | Type | Amount | Evaporator temp. | Type | Amount | | Primary | Secondary | |
| **Ex.** | | g/h | °C | | kg/h | m³ (STP)/h | m³ (STP) /h | m³ (STP) /h | °C |
| **1** | AlCl₃ | 4500 | >185 | - | - | 2.2 | 6.5 | 20 | 2016 |
| **2** | AlCl₃ | 4500 | >185 | - | - | 2.4 | 9.5 | 17 | 1612 |
| **3** | AlCl₃ | 4500 | >185 | - | - | 2.5 | 6.5 | 20 | 2215 |
| **4** | AlCl₃ | 4500 | >185 | - | - | 2.2 | 7.5 | 20 | 1810 |
| **5** | KCl | 21 | 1500 | SiCl₄ | 8 | 4.5 | 11.9 | 30 | 1907 |
| **6** | KCl | 21 | 1500 | SiCl₄ | 6.5 | 2.2 | 4.7 | 30 | 2121 |
| **7** | KCl | 41 | 1500 | SiCl₄ | 8 | 4.5 | 11.9 | 30 | 1996 |
| **8** | KCl | 41 | 1500 | SiCl₄ | 6.5 | 2.2 | 4.7 | 30 | 2121 |
| **9** | AgNO₃ | 0.55 | >444 | SiCl₄ | 8 | 4.5 | 10 | 20 | 2203 |
| **10** | AgNO₃ | 0.55 | >444 | SiCl₄ | 8 | 4.5 | 8.6 | 20 | 2387 |
| **11** | FeCl₃ | 0.48 | >280 | TiCl₄ | 1.6 | 0.3 | 3.1 | 2 | 866 |

**Table 2: Analytic values of the resulting pulverulent solids**

| | | **Oxide 1** | | **Oxide 2** | |
|---|---|---|---|---|---|
| **Ex.** | **BET** | **Type** | **Content** | **Type** | **Content** |
| | m²/g | | % by wt. | | % by wt. |
| **1** | 98 | Al₂O₃ | 100 | - | - |
| **2** | 155 | Al₂O₃ | 100 | - | - |
| **3** | 90 | Al₂O₃ | 100 | - | - |
| **4** | 106 | Al₂O₃ | 100 | - | - |
| **5** | 275 | SiO₂ | 99.43 | K₂O | 0.42 |
| **6** | 289 | SiO₂ | 99.38 | K₂O | 0.54 |
| **7** | 281 | SiO₂ | 99.01 | K₂O | 0.88 |
| **8** | 285 | SiO₂ | 98.77 | K₂O | 1.07 |
| **9** | 203 | SiO₂ | 98.26 | Ag₂O | 1.60 |
| **10** | 129 | SiO₂ | 98.19 | Ag₂O | 1.62 |
| **11** | 56 | TiO₂ | 73.68 | Fe₂O₃ | 26.12 |

## Claims

1. Process for preparing pulverulent solids,
the pulverulent solid being a mixed metal oxide powder or a metal-metal oxide powder having a BET surface area of 30 to 400 m²/g,
in which one or more oxidizable and/or hydrolysable metal compounds are reacted in a high-temperature zone in the presence of oxygen and/or steam, the reaction mixture is cooled after the reaction, and the pulverulent solid is removed from gaseous substances,
**characterized in that**
at least one metal compound is introduced into the high-temperature zone in solid form, the evaporation temperature of the metal compound being below the temperature of the high-temperature zone,
and at least one further oxidizable and/or hyrdrolysable metal compound the metal compound being present in vaporous form is introduced into the high-temperature zone,
wherein the the high-temperature zone is a flame formed by reaction of an oxygenous gas with a hydrogenous combustion gas.

2. Process according to Claim 1, **characterized in that** the solid metal compound has a particle size of 0.1 to 5000 µm.

3. Process according to Claims 1 or 2, **characterized in that** the solid, oxidizable and/or hydrolysable metal compound contains, as the metal component Ag, Al, K, Ti, Er, Fe, P, Ta, Yb, Zr or a mixture thereof.

4. Process according to Claims 1 to 3, **characterized in that** the solid, oxidizable and/or hydrolysable metal compound is a chloride, a nitrate, a sulphate, a carbonate, an alkoxide, a carboxylate, an acetylacetonate or a carbonyl.

5. Process according to Claims 1 to 4, **characterized in that** the vaporous, oxidizable and/or hydrolysable metal compound contains, as the metal component, Ag, Al, As, Au, B, Ba, Be, Bi, Ca, Cd, Ce, Co, Cr, Cs, Cu, Er, Eu, Fe, Ga, Gd, Ge, Hf, In, K, La, Li, Mg, Mn, Mo, Na, Nb, Nd, Ni, P, Pb, Pd, Pm, Pr, Pt, Rb, Ru, Sb, Sc, Si, Sm, Sn, Sr, Ta, Tb, Ti, Tl, Tm, V, W, Y, Yb, Zn, Zr or a mixture thereof.

6. Process according to Claims 1 to 5, **characterized in that** the vaporous, oxidizable and/or hydrolysable metal compound is a chloride, a nitrate, a sulphate, a carbonate, a carboxylate, an acetylacetonate or a carbonyl.

7. Process according to Claims 1 to 6, **characterized in that** the amount of oxygen and/or steam is at least sufficient to completely convert the metal compound.

## Patentansprüche

1. Verfahren zur Herstellung von pulverförmigen Feststoffen,
wobei der pulverförmige Feststoff ein Metallmischoxidpulver oder ein Metall-Metalloxid-Pulver mit einer BET-Oberfläche von 30 bis 400 m²/g ist,
bei dem man eine oder mehrere oxidierbare und/oder hydrolysierbare Metallverbindungen in einer Hochtemperaturzone in Gegenwart von Sauerstoff und/oder Wasserdampf umsetzt, das Reaktionsgemisch nach der Reaktion kühlt und den pulverförmigen Feststoff von gasförmigen Stoffen abtrennt, **dadurch gekennzeichnet, dass**
wenigstens eine Metallverbindung in fester Form in die Hochtemperaturzone eingebracht wird, wobei die Verdampfungstemperatur der Metallverbindung unterhalb der Temperatur der Hochtemperaturzone liegt, und wenigstens eine weitere oxidierbare und/oder hydrolysierbare Metallverbindung in die Hochtemperaturzone eingebracht wird, wobei die Metallverbindung dampfförmig vorliegt,
wobei die Hochtemperaturzone eine durch Reaktion eines sauerstoffhaltigen Gases mit einem wasserstoffhaltigen Brenngas gebildete Flamme ist.

2. Verfahren nach Anspruch 1, **dadurch gekennzeichnet, dass** die feste Metallverbindung eine Korngröße von 0,1 bis 5000 µm aufweist.

3. Verfahren nach den Ansprüchen 1 oder 2, **dadurch gekennzeichnet, dass** die feste, oxidierbare und/oder hydrolysierbare Metallverbindung als Metallkomponente Ag, Al, K, Ti, Er, Fe, P, Ta, Yb, Zr oder ein Gemisch davon enthält.

4. Verfahren nach den Ansprüchen 1 bis 3, **dadurch gekennzeichnet, dass** die feste, oxidierbare und/oder hydrolysierbare Metallverbindung ein Chlorid, ein Nitrat, ein Sulfat, ein Carbonat, ein Alkoholat, ein Carboxylat, ein Acetylacetonat oder ein Carbonyl ist.

5. Verfahren nach den Ansprüchen 1 bis 4, **dadurch gekennzeichnet, dass** die dampfförmige, oxidierbare und/oder hydrolysierbare Metallverbindung als Metallkomponente Ag, Al, As, Au, B, Ba, Be, Bi, Ca, Cd, Ce, Co, Cr, Cs, Cu, Er, Eu, Fe, Ga, Gd, Ge, Hf, In, K, La, Li, Mg, Mn, Mo, Na, Nb, Nd, Ni, P, Pb, Pd, Pm, Pr, Pt, Rb, Ru, Sb, Sc, Si, Sm, Sn, Sr, Ta, Tb, Ti, Tl, Tm, V, W, Y, Yb, Zn, Zr oder ein Gemisch davon enthält.

6. Verfahren nach den Ansprüchen 1 bis 5, **dadurch gekennzeichnet, dass** die dampfförmige, oxidierbare und/oder hydrolysierbare Metallverbindung ein Chlorid, ein Nitrat, ein Sulfat, ein Carbonat, ein Carboxylat, ein Acetylacetonat oder ein Carbonyl ist.

7. Verfahren nach den Ansprüchen 1 bis 6, **dadurch gekennzeichnet, dass** die Menge an Sauerstoff und/oder Wasserdampf wenigstens ausreicht, um die Metallverbindung vollständig umzusetzen.

## Revendications

1. Procédé de préparation de solides pulvérulents,
le solide pulvérulent étant une poudre d'oxydes métalliques mixtes ou une poudre métal-oxyde métallique ayant une surface spécifique BET de 30 à 400 m²/g,
dans lequel un ou plusieurs composés métalliques oxydables et/ou hydrolysables sont mis en réaction dans une zone à haute température en présence d'oxygène et/ou de vapeur d'eau, le mélange réactionnel est refroidi après la réaction, et le solide pulvérulent est retiré des substances gazeuses,
**caractérisé en ce que**
au moins un composé métallique est introduit dans la zone à haute température sous forme solide, la température d'évaporation du composé métallique étant inférieure à la température de la zone à haute température,
et au moins un autre composé métallique oxydable et/ou hydrolysable, le composé étant présent sous forme de vapeur, est introduit dans la zone à haute température, dans lequel la zone à haute température est une flamme formée par réaction d'un gaz oxygéné avec un gaz de combustion hydrogéné.

2. Procédé selon la revendication 1, **caractérisé en ce que** le composé métallique solide a une taille de particules de 0,1 à 5000 µm.

3. Procédé selon les revendications 1 et 2, **caractérisé en ce que** le composé métallique solide oxydable et/ou hydrolysable contient comme composant métallique Ag, Al, K, Ti, Er, Fe, P, Ta, Yb, Zr ou un mélange de ceux-ci.

4. Procédé selon les revendications 1 à 3, **caractérisé en ce que** le composé métallique solide oxydable et/ou hydrolysable est un chlorure, un nitrate, un sulfate, un carbonate, un alcoxyde, un carboxylate, un acétylacétonate ou un carbonyle.

5. Procédé selon les revendications 1 à 4, **caractérisé en ce que** le composé métallique oxydable et/ou hydrolysable à l'état de vapeur contient comme composant métallique Ag, Al, As, Au, B, Ba, Be, Bi, Ca, Cd, Ce, Co, Cr, Cs, Cu, Er, Eu, Fe, Ga, Gd, Ge, Hf, In, K, La, Li, Mg, Mn, Mo, Na, Nb, Nd, Ni, P, Pb, Pd, Pm, Pr, Pt, Rb, Ru, Sb, Sc, Si, Sm, Sn, Sr, Ta, Tb, Ti, Tl, Tm, V, W, Y, Yb, Zn, Zr ou un mélange de ceux-ci.

6. Procédé selon les revendications 1 à 5, **caractérisé en ce que** le composé métallique oxydable et/ou hydrolysable à l'état de vapeur est un chlorure, un nitrate, un sulfate, un carbonate, un carboxylate, un acétylacétonate ou un carbonyle.

7. Procédé selon les revendications 1 à 6, **caractérisé en ce que** la quantité d'oxygène et/ou de vapeur d'eau est au moins suffisante pour convertir entièrement le composé métallique.
